# NEUE EUROPÄISCHE PATENTSCHRIFT

(11) **EP 0 331 797 B2**
(45) Veröffentlichungstag und Bekanntmachung des Hinweises auf die Entscheidung über den Einspruch: **17.01.1996**
(45) Hinweis auf die Patenterteilung: 21.10.1992
(21) Anmeldenummer: 88118936.9
(22) Anmeldetag: 14.11.1988
(51) Int. Cl.: F16H 59/10

(54) **Schaltvorrichtung für ein Automatikgetriebe eines Kraftfahrzeugs**
Gear-shifting device for an automatic transmission of a motor vehicle
Dispositif de changement de vitesse pour une transmission automatique d'une automobile

(30) Priorität: 10.03.1988 DE 3807881
(43) Veröffentlichungstag der Anmeldung: 13.09.1989
(73) Patentinhaber: Dr.Ing.h.c. F. Porsche Aktiengesellschaft, D-70435 Stuttgart (DE)
(72) Erfinder: Müller, Robert, Dipl.-Ing.(FH), D-7251 Mönsheim (DE); Maier, Ulrich, D-7149 Freiberg/N (DE); Raff, Friedrich, D-7147 Eberdingen (DE)

(56) Entgegenhaltungen:
- EP-A- 0 122 014
- EP-A- 0 207 260
- WO-A-87/00806
- DE-A- 3 717 675
- FR-A- 2 033 200
- FR-A- 2 298 827
- Shigemitsu Tanaka u. a.: "Electronically controlled mech. autom. transmission for Heavy Duty Trucks" 31 Oktober 1986, SAE, Warrendale, Pa, USA

## Beschreibung

Die Erfindung betrifft eine Schaltvorrichtung für ein Automatikgetriebe eines Kraftfahrzeugs nach dem Oberbegriff des Anspruchs 1.

Ein derartiges Getriebe ist in Bosch Techn. Berichte 7 (1983)4, Seite 160 bis 166 beschrieben. Der Antrieb erfolgt über einen hydrodynamischen Wandler, der als Anfahrkupplung und zur Momentenübersetzung dient. Mittels einer Überbrückungskupplung kann der Wandler überbrückt und ein starrer Durchtrieb zu einem nachgeschalteten 4-Gang-Planetengetriebe hergestellt werden. Mit Sensoren werden die Getriebeausgangsdrehzahl, der Lastzustand des Motors, die Motordrehzahl sowie die Position des Wählhebels erfaßt und als elektrische Größen einem elektronischen Steuergerät zugeführt. Aus diesen Informationen wird nach einem vorgegebenen Rechenprogramm der jeweils optimale Gang bestimmt und vom Steuergerät über elektromagnetische Gangschaltventile am Getriebe hydraulisch geschaltet. An einem Programmschalter sind vom Fahrer drei Schaltprogramme wählbar: ein Economy-Programm für besonders wirtschaftliche Fahrweise, ein Leistungsprogramm für sportliches Fahren und ein Programm mit manueller Einstellung des jeweils gewünschten Getriebeganges über den Wählhebel. In einer Weiterentwicklung sind die ersten beiden Programme in das elektronische Steuergerät integriert, das zu diesem Zweck um Steuereinheiten erweitert wurde, die hier nicht näher erörtert werden sollen.

Aus der Druckschrift "Electronically Controlled Mechanical Automatic Transmission for Heavy Duty Trucks and Buses", 31. Oktober 1986, SAE, Warrendale Pa, USA ist ein Automatikgetriebe mit einem in einer Schaltgasse bewegbaren Wählhebel bekannt. Durch Längsbewegen des Wählhebels sind die Fahrstufen R, N, D vorwählbar. Durch Querbewegen des Wahlhebels in der Schaltgasse sind die Vorwärtsgänge des Getriebes manuell schaltbar.

Es ist die Aufgabe der Erfindung, eine Schaltvorrichtung für Automatikgetriebe zu schaffen, die bedienungsfreundlich gestaltet ist und dem Fahrer des Kraftfahrzeugs ein ergonomisches, Fehlbedienungen weitgehend ausschließendes Fahren ermöglicht.

Zur Lösung dieser Aufgabe dienen die Merkmale des Anspruchs 1. Wenn mit dem Wählhebel in einer ersten Schaltgasse die üblichen Wählstellungen eines Automatikgetreibes vorwählbar sind und nach Umschalten in eine zweite parallele Schaltgasse die Vorwärtsgänge des Getriebes mit einer Tippschaltung manuell schaltbar sind, hat der Fahrer die Möglichkeit, entweder im Automatikbetrieb oder Manuellbetrieb zu fahren. Zum Schalten der Gänge in der zweiten Schaltgasse genügt ein kurzes Antippen in der einen Richtung, um in einen Gang zu schalten. Danach kehrt der Wipphebel selbsttätig in die neutrale Mittellage zurück. Bei zweimaligem Antippen erfolgt eine Hoch- oder Rückschaltung um zwei Gänge. Bei dem gewählten Viergang-Getriebe kann durch dreimaliges Antippen maximal eine Hoch- oder Rückschaltung um drei Gänge erfolgen. Die Unteransprüche enthalten für diesen Zweck vorteilhafte konstruktive Ausgestaltungen des Wählhebels und seiner Lagerung in einem Hohlrahmen der Fahrzeugkarosserie.

Ein Ausführungsbeispiel der Erfindung ist in der Zeichnung dargestellt und wird nachfolgend erläutert.

Es zeigen:

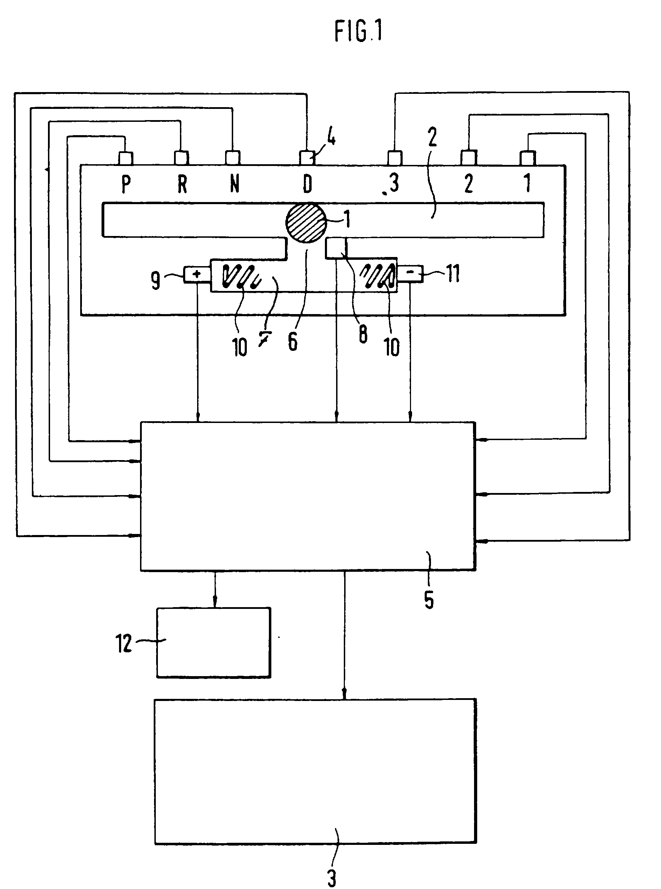

- Fig. 1: Getriebe- Steuersystem mit Schaltvorrichtung,
- Fig. 2: Schaltvorrichtung im Längsschnitt,
- Fig. 3: Schaltvorrichtung im Querschnitt,
- Fig. 4: Schnitt nach der Linie IV-IV der Fig. 3.

Mit einem Wählhebel 1, der in einer ersten Schaltgasse 2 in Längsrichtung des Kraftfahrzeugs verschwenkbar ist, sind die verschiedenen Stellungen P = Parken, R = Rückwärtsgang, N = Neutral-Null, D = Drive mit 4. Gang, 3 = 3. Gang, 2 = 2. Gang, 1 = 1. Gang eines automatischen Getriebes 3 anwählbar. Die Wählstellungen werden durch Sensoren 4 erfaßt, die elektrische Signale an ein Steuergerät 5 des Getriebes 3 geben. Aus der Wählstellung D heraus ist der Wählhebel 1 über eine Quergasse in eine zur ersten Schaltgasse 2 parallele zweite Schaltgasse 7 umschaltbar. Der Umschaltvorgang wird durch einen Sensor 8 erfaßt, der dabei ein Signal an das Steuergerät 5 liefert.

Beim Verschwenken des Wählhebels 1 in der zweiten Schaltgasse 7 in Fahrtrichtung des Kraftfahrzeugs spricht ein Plus-Sensor 9 an, dessen Signal das Steuergerät veranlaßt, am Getriebe 3 eine Hochschaltung um einen Gang vorzunehmen. Danach wird der Wählhebel 1 durch eine Feder 10 in die neutrale Mittellage der Schaltgasse 7 zurückgedrückt. Beim nochmaligen Antippen am Sensor 9 erfolgt eine weitere Hochschaltung um einen Gang, falls nicht bereits der höchste Getriebegang eingelegt ist. Beim Verschwenken des Wählhebels entgegen der Fahrtrichtung gibt ein Minus-Sensor 11 ein Signal an das Steuergerät 5 und löst am Getriebe 3 eine Rückschaltung um einen Gang aus. An das Steuergerät 5 ist ein optisches Anzeigegerät 12 angeschlossen, das die Winkelstellungen in der ersten Schaltgasse 2 und den jeweils eingelegten Getriebegang 1, 2, 3 oder 4 anzeigt.

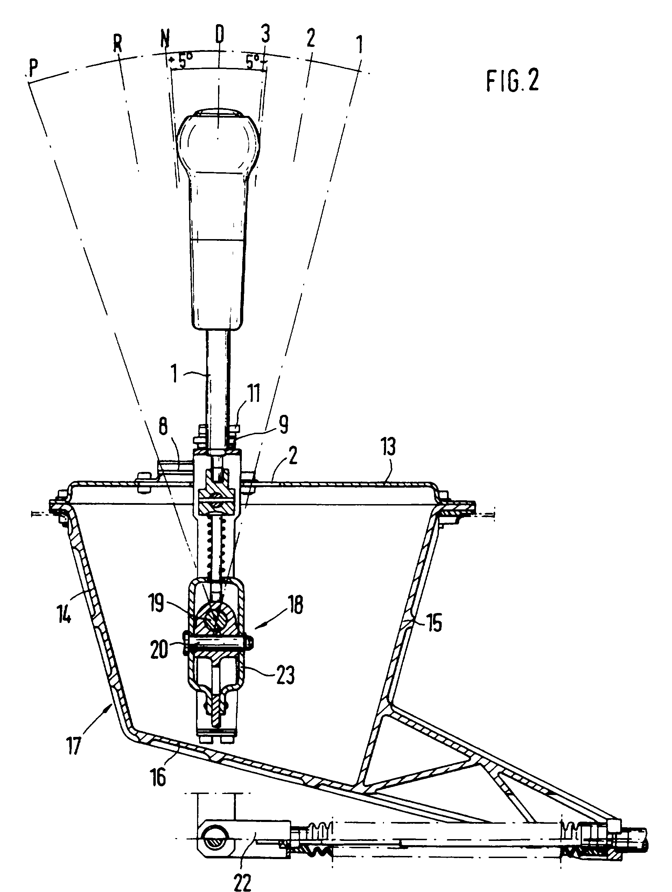

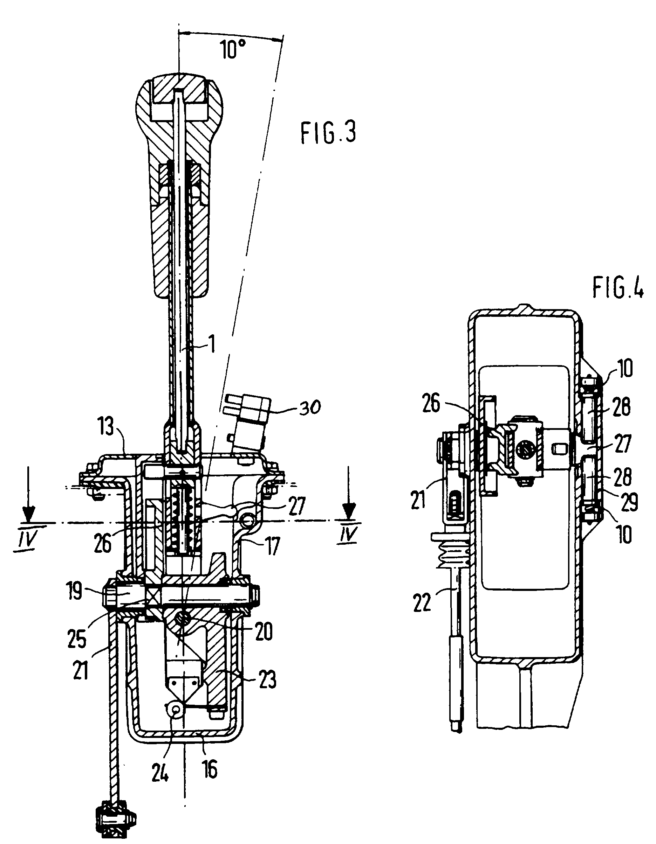

Die konstruktive Ausführung der Schaltvorrichtung ist in Fig. 2, Fig. 3 und Fig. 4 dargestellt.

Die in Längsrichtung des Kraftfahrzeugs verlaufende erste Schaltgasse 2 und zweite Schaltgasse 7 sowie die Quergasse 6 sind als Kulissen für den Wählhebel 1 in einer Deckplatte 13 ausgebildet. Die Deckplatte 13 ist mit einem vorderen Seitenteil 14 und einem hinteren Seitenteil 15 verschraubt und bildet mit ihnen und einer Bodenplatte 16 einen Hohlrahmen 17, der an der Karosserie des Kraftfahrzeugs befestigt ist. Der in den Hohlrahmen 17 hineinragende Teil des Wählhebels 1 ist mit einem Kardangelenk 18 verbunden, um dessen zwei quer zueinanderliegende Lagerbolzen 19 und 20 der Wählhebel 1 schwenkbar ist.

Der obere Lagerbolzen 19 ist in dem Hohlrahmen 17 gelagert. Um ihn ist der Wählhebel zur Ausführung der Wählstellungen P, R, N, D, 3, 2, 1 schwenkbar. Hierzu ist von der mittleren Wählstellung D aus in Fahrtrichtung des Kraftfahrzeugs ein Schwenkwinkel von insgesamt 34,6°, in Gegenrichtung ein Schwenkwinkel von 28,2° vorgesehen. Beim Verschwenken wird ein außerhalb des Hohlrahmens am Lagerbolzen 19 befestigter Betätigungshebel 21 mitgenommen, der über eine an ihm angelenkte Betätigungsstange 22 in das Getriebe 3 eingreift, und die dort befindlichen Sensoren 4 für die Wählstellungen P, R, N, D, 3, 2, 1 betätigt.

Am unteren Bereich des Wählhebels 1 ist mit ihm ein Gelenkrahmen 23 verbunden, der bei Ausführung der Wählstellungen mitverschwenkt wird. Im Gelenkrahmen 13 ist unterhalb des Lagerbolzens 19 der Lagerbolzen 20 gelagert, um den der Wählhebel 1 beim Umschalten von der ersten Schaltgasse 2 zur zweiten Schaltgasse 7 schwenkbar ist. Der hierzu erforderliche Schwenkwinkel beträgt ca. 10°. Durch eine an der Unterseite des Wählhebels 1 wirkende, am Gelenkrahmen 23 befestigte Federraste 24 werden die Umschaltstellungen des Wählhebels arretiert. Wird der Wählhebel 1 aus Stellung D heraus durch die Quergasse 6 hindurch in die zweite Schaltgasse 7 umgeschaltet, so wird die Verbindung zu dem auf dem Lagerbolzen 19 mit einer Vierkantverbindung 25 drehfesten Mitnahmestück 26 gelöst, um die in der zweiten Schaltgasse 7 auszuführenden Wippbegegungen nicht auf die im Getriebe 3 befindlichen Wählstellungs-Sensoren 4 zu übertragen.

Nach Umschalten in die zweite Schaltgasse 7 greift ein an dem Wählhebel 1 senkrecht vorstehender Zapfen 27 zwischen zwei an ihm beidseitig anliegende Haltezapfen 28 ein, die durch die Feder 10 in einem Federtopf 29 abgestützt sind. Der Federtopf ist außen am Hohlrahmen mit ihm einstückig ausgebildet. Mit den Haltezapfen 28 und den Federn 10 wird der Wählhebel in der zweiten Schaltgasse 7 in neutraler Mittellage gehalten. Ein Verschwenken des Wählhebels in der zweiten Schaltgasse 7 von ca. 5° reicht aus, um den Plus-Sensor 9 bzw. in Gegenrichtung den Minus-Sensor 11 ansprechen zu lassen und am Getriebe 3 eine Hochschaltung oder eine Rückschaltung um einen Gang auszulösen. Der Plus-Sensor 9 und der Minus-Sensor 11 und der das Umschalten erfassende Sensor 8 sind als elektromechanische Mikroschalter ausgebildet und in einem Schaltergehäuse 30 untergebracht, das oben auf der Deckplatte 13 angeschraubt ist.

## Patentansprüche

1. A) Eine Schaltvorrichtung für ein durch ein elektronisches Steuergerät gesteuertes automatisches Getriebe (3),
B) mit einem Wählhebel (1), durch dessen Längsschwenken in einer ersten Schaltgasse (2) die Wählstellungen (P, R, N, D, 3, 2, 1) des automatischen Getriebes vorwählbar sind,
C) mit dem in einer zweiten Schaltgasse (7) zusätzlich die Vorwärtsgänge des Getriebes manuell schaltbar sind,
D) wobei in der zweiten Schaltgasse (7) durch einmaliges Verschwenken des Wählhebels (1) aus einer neutralen Mittellage heraus und durch Kontaktgabe an einen Plus-Sensor (9) ein Hochschalten um einen Gang, und durch einmaliges Verschwenken in der entgegengesetzten Richtung und Kontaktgabe an einen Minus-Sensor (11) ein Rückschalten um einen Gang manuell schaltbar ist, und
E) der Wählhebel (1) anschließend jeweils selbsttätig in die neutrale Mittellage der zweiten Schaltgasse zurückgestellt wird, **dadurch gekennzeichnet daß**,
a) der Wählhebel (1) aus der Stellung D in der ersten Schaltgasse (2) über eine Quergasse (6) in die zweite Schaltgasse (7) umschaltbar ist,
b) die zweite Schaltgasse (7) parallel zur ersten Schaltgasse (2) angeordnet ist, und
c) mit dem Wählhebel (1) durch Längsverschwenken in der zweiten Schaltgasse (7) die Vorwärtsgänge des Getriebes manuell schaltbar sind.

2. Schaltvorrichtung nach Anspruch 1, dadurch gekennzeichnet, daß die Wählstellungen (P, R, N, D, 3, 2, 1) des Wählhebels (1) in der ersten Schaltgasse (2) durch Sensoren (4), das Umschalten von der ersten Schaltgasse (2) zur zweiten Schaltgasse (7) durch einen Sensor (8) erfaßt wird und daß die Signale der Sensoren (4, 8) auf ein elektronisches Steuergerät (5) gegeben werden, von dem das Getriebe (3) elektrohydraulisch betätigt und ein Anzeigegerät (12) für die Wählstellungen angesteuert wird.

3. Schaltvorrichtung nach Anspruch 1 und 2, dadurch gekennzeichnet, daß die Schwenkbewegungen des Wählhebels (1) durch Sensoren (8, 9, 11) erfaßt und in das Steuergerät (5) eingegeben und in ihm so verarbeitet werden, daß entsprechend der Anzahl der aufeinanderfolgenden Schwenkbewegungen des Wählhebels das Getriebe (3) um einen, zwei oder drei Gänge hoch- bzw. rückgeschaltet wird.

4. Schaltvorrichtung nach Anspruch 1, dadurch gekennzeichnet, daß die in Fahrtrichtung verlaufende erste Schaltgasse (2) die zweite Schaltgasse (7) und die Quergasse (6) in einer Deckplatte (13) angebracht sind, die zusammen mit einem vorderen Seitenteil (14) und einem hinteren Seitenteil (15) und einer Bodenplatte, (16) einon an der Karosserie das Kraftfahrzeugs befestigten Hohlrahmen (17) bildet.

5. Schatvorrichtung nach Anspruch 4, dadurch gekennzeichnet, daß der Wähihebel (1) am Hohlrahmen (17) zur Ausführung der Wählbewegungen und der zum Umschalten erforderlichen Querbewegung in einem Kardangelenk (18) mit zwei zueinander senkrechten Lagerbolzen (19, 20) gelagert ist.

6. Schaltvorrichtung nach Anspruch 4 und 5, dadurch gekennzeichnet, daß der Wählhebel (1) in der zweiten Schaltgasse (7) durch beidseitig an seinem Zapfen (27) anliegende, federnd abgestützte Haltezapfen (28) in neutraler Mittellage gehalten ist.

7. Schaltvorrichtung nach Anspruch 4 oder 6 dadurch gekennzeichnet, daß als Sensoren (8, 9, 11) für den Umschaltvorgang sowie für die Hochschalt und Rückschaltschwenkbewegung Mikroschalter dienen, die an einem oben auf der Deckplatte (13) angeschraubten Schaltergehäuse (30) untergebracht sind.

8. Schaltvorrichtung nach Anspruch 5 und 6, dadurch gekennzeichnet, daß die Umschalt-Schwenklagen des Wählhebels (1) durch eine an seiner Unterseite wirkende Federraste (24) festgelegt sind, die bei Schwenkbewegungen des Wählhebels (1) längs der Schaltgassen (2, 7) mitverschwenkt wird.

## Claims

1. A) A gearshift device for an automatic transmission (3) controlled by an electronic control device,
B) having a selector lever (1), by means of which the optional positions (P, R, N, D, 3, 2, 1) of the automatic transmission can be preselected by longitudinally tilting the selector lever in a first gearshift path (2)
C) and with which the forward speeds of the transmission can additionally be manually shifted in a second gearshift path (7),
D) wherein in the second gearshift path (7), by tilting the selector lever (1) once from a neutral centre position and by making contact with a plus sensor (9), shifting up by one gear can be carried out manually, and by tilting once in the opposite direction an making contact with a minus sensor (1 1), shifting down by one gear can be carried out manually, and
E) the selector lever (1) is then automatically retumed to the neutral centre position in the second gearshift path,
**characterised in that**
a) the selector lever (1) can be shifted from the position D in the first gearshift path (2) over into a second gearshift path (7) via a cross-path (6),
b) the second gearshift path (7) is parallel to the first gearshift path (2) and
c) the forward speeds of the transmission can be manually shifted by longitudinally tilting the selector lever (1) in the second gearshift path (7).

2. A gearshift device according to claim 1, characterised In that the optional positions (P, R, N, D, 3, 2, 1) of the selector lever (1) in the first gearshift path (2) are detected by sensors (4), and shifting over from the first gearshift path (2) to the second gearshift path (7) Is detected by a sensor (8), and in that the signals of the sensors(4, 8) are transmitted to an electronic control device (5), by which the transmission (3) is electro-hydraulically actuated and an indicator (12) for the optional positions is activated.

3. A gearshift device according to claims 1 and 2, characterised In that the tilting movements of the selector lever (1) are detected by sensors (8, 7 11) and fed Into the control device (5) and processed therein in such a way that the transmission (3) is shifted up or down by one, two or three gears according to the number of consecutive tilting movements of the selector lever.

4. A gearshift device according to claim 1, characterised in that the first gearshift path (2), extending in the direction of travel, the second gearshift path (7) and the cross-path (6) are provided in a cover plate (13) which, together with a front side part (14) and a rear side part (15) and a base plate (16), forms a hollow frame (17) mounted on the body of the motor vehicle.

5. A gearshift device according to claim 4, characterised in that the selector lever (1) is mounted on the hollow frame (17) in a cardan joint (18) with two bearing bolts (19, 20) perpendicular to each other for the purpose of executing the optional movements and the transverse movement necessary for shifting over.

6. A gearshift device according to claims 4 and 5, characterised in that the selector lever (1) in the second gearshift path (7) is held in the neutral centre position by resiliently supported retaining pins (28) resting against Its pin (27) on both sides.

7. A gearshift device according to claim 4 or 6, characterised in that microswitches serve as sensors (8, 9, 11) for the shifting-over process and for the tilting movement for shifting up and shifting down, the said microswitches being arranged on a switch housing (30) screwed onto the top of the cover plate (13).

8. A gearshift device according to claims 5 and 8, characterised in that the shifting-over tilting positions of the selector lever (1) are fixed by a spring detent (24) acting on the underside thereof, the said spring detent also being tilted during the tilting movements of the selector lever (1) along the gearshift paths (2, 7).

## Revendications

1. A) Dispositif de changement de vitesse pour une transmission (3) automatique, commandée par un appareil de commande électronique,
B) comportant un levier de sélection (1) dont basculement longitudinal dans une première voie de commande (2) permet de présélectionner les positions (P, R, N, D, 3, 2, 1) de la boîte de vitesses automatique,
C) avec quoi il est possible dans une seconde voie de commande (7) de commander manuellement en plus les marches avant de la boîte de vitesses,
D) et, dans la seconde voie (7), le passage à la vitesse supérieure pouvant être commandé manuellement par basculement unique du levier de sélection (1), à partir d'une position centrale de point mort et par contact sur un capteur plus (9), le passage à la vitesse inférieure pouvant être commandé manuellement par pivotement unique dans le sens opposé et par contact sur un capteur moins (11), et
E) le levier de sélection (1) étant ensuite replacé automatiquement dans la position centrale de point mort dans la seconde voie de commande,
**caractérisé en ce que**
a) le levier de sélection (1) peut être commuté, par une voie transversale (6), à partir de la position D de la première voie de commande (2) dans une seconde voie de commande (7),
b) la seconde voie de commande (2) est parallèle à la première voie de commande(2) et
c) avec le levier de sélection (1) il est possible de commander manuellement les marches avant de la boîte de vitesses par basculement longitudinal dans la seconde voie (7).

2. Dispositif de changement de vitesse selon la revendication 1, caractérisé en ce que les positions de sélection (P, R, M, D, 3, 2, 1) du levier de sélection (1) dans la première voie (2) sont détectées par des capteurs (4), le passage de la première voie (2) à la seconde voie (7) par un capteur (8) et en ce que les signaux des capteurs (4, 8) sont délivrés à un appareil de commande (5) électronique qui actionne la boîte de vitesses (3) de manière éloctro-hydraulique et commande un appareil d'affichage (12) des positions sélectionnées.

3. Dispositif de changement de vitesse selon les revendications 1 et 2, caractérisé en ce que les basculements du levier de sélection (1) sont enregistrés par des capteurs (8, 9, 11) et introduits dans l'appareil de commande (5) et sont traités dans celui-ci de manière que la boîte de vitesses (3) passe dans une, deux ou trois vitesses supérieures ou inférieures, en fonction du nombre de basculements successifs du levier de sélection.

4. Dispositif de changement de vitesse selon la revendication 1, caractérisé en ce que la première voie de commande (2), sétendant dans le sens de la marche, la seconde voie (7) et la voie transversale (6) sont placées dans une plaque de couverture (13) qui avec une partie latérale avant (14) et une partie latérale arrière (15) et une plaque de fond (16) forment un cadre creux (17), fixé sur la carrosserie du véhicule.

5. Dispositif de changement de vitesse selon la revendication 4, caractérisé en ce que le levier de sélection (1) est monté sur le cadre creux (17) pour l'exécution des déplacements de sélection et du déplacement transversal, nécessaires à la commutation, dans un joint de cardan (18) avec deux axes de palier (19, 20), perpendiculaires l'un à l'autre.

6. Dispositif de changement de vitesse selon les revendications 4 et 5, caractérisé en ce que le levier de sélection (1) est maintenu dans la position centrale de point mort, dans la seconde voie (7), par des doigts d'arrêt (28) soutenus élastiquement, s'appliquant de part et d'autre de son pivot (27).

7. Dispositif de changement de vitesse selon la revendication 4 ou 6, caractérisé en ce qu'on a recours, comme capteurs (8, 9, 11), pour l'opération de commutation ainsi que pour le basculement dans la vitesse supérieure et dans la vitesse inférieure, à des micro-interrupteurs qui sont logés dans un boîtier (30) vissé à la partie supérieure de la plaque de couverture (13).

8. Dispositif de changement de vitesse selon les revendications 5 et 6, caractérisé en ce que les positions de basculement et de commutation du levier de sélection (1) sont définies par un dispositif d'arrêt à ressort (24), agissant sur sa face inférieure, qui pivote en même temps que le levier de sélection (1), le long des voies (2, 7).
